# EUROPEAN PATENT APPLICATION

(11) **EP 2 466 548 A1**
(43) Date of publication of application: **20.06.2012**
(21) Application number: 11192570.7
(22) Date of filing: 08.12.2011
(51) Int. Cl.: G06T 11/60

(54) **Method of processing an object-based image file with content type dependent image processing algorithms**

(30) Priority: 16.12.2010 EP 10306431
(71) Applicant: Océ-Technologies B.V., 5914 CA Venlo (NL)
(72) Inventor: Leynadier, Christophe, A., 94700 Maisons Alfort (FR); Guermont, Jérôme, O., R., 94250 Gentilly (FR); Dupré, Michaël, 91800 Brunoy (FR)
(74) Representative: De Jong, Robbert Arij Jeroen

(57) **Abstract**

1. A method of processing an object-based image file with content type dependent image processing algorithms, comprising the steps of:
- rasterizing the image,
- segmenting the rasterized image into segments that are distinguished by pre-defined content types,
- deriving, from the image file, a display list with objects to be included in the image,
- associating each object with one of the segments on the basis of a spatial relationship between the object and the segments,
- selecting, for each object, an image processing algorithm based on the content type of the associated segment, and
- processing each object with the selected algorithm.

## Description

The invention relates to a method of processing an object-based image file with content type dependent image processing algorithms.

When an image is displayed on a display device or printed with a printer, various image processing algorithms may be applied for improving the appearance of the image. For example, in case of a colour image, the image processing algorithms include colour management algorithms used for converting the colours from the colour space of the image source to the colour space of the display or printer. Other examples of image processing algorithms are halftoning algorithms, scaling algorithms, algorithms for background colour correction, contrast enhancement or edge sharpening, optical character recognition algorithms, and the like.

In general, the optimal selection of image processing algorithms and processing parameters will depend upon the image contents. For example, business graphics are typically required to have bright colours and sharp and clear contours, whereas, in case of a photographic image, the colour management should be such that the colours in the photo look realistic, and contrast and edge sharpening should be moderate. On the other hand, text characters are typically required to be black and have clear contours. If text is to be printed with a colour printer, colour management should be such that the text characters are printed only with black ink or toner in order to avoid colour bleeding.

When an image includes contents of different types, it will normally not be possible to find a unique image processing algorithm that is optimal for all content types in the image, and it is therefore desirable to be able to apply different image processing algorithms to different parts of the image.

In case of a pixel-based image file, i.e. an image file which has a format of a bitmap or pixel map indicating the colour of each individual pixel in the image, a so-called segmentation process may be used for identifying those areas in the image that include contents of certain pre-defined content types such as text, photo, business graphics, maps (text and lines on multi-colour background), CAD drawings, and the like. Such segmentation process may for example be based on two-dimensional spatial frequency analysis or the like. An example of a segmentation process is described in US 5 073 953.

It is a general problem of such segmentation process that it is difficult in many cases to clearly define or recognize the borders of the segments. When the borders have not been determined correctly and different image processing algorithms are applied to adjacent segments, undesired artefacts may appear on the segment borders.

In case of an object-based image file, e. g. an image file given in a page description language (PDL), such as PostScript or PDF, including specifications of a number of objects or primitives such as the drawings, text objects, photos or the like, that compose the image, some information on the content type will explicitly or implicitly be included in the object definitions already. For example, when the image file includes text in the form of ASCII characters along with attributes for font type, font size and the like, it is clear that the related content type will be text. Similarly, when the image file includes vector graphics, i.e. mathematical descriptions of objects or primitives such as lines, curves, circles and the like, along with attributes for line width, contour colour, fill colour and the like, it is clear that the content type will hardly be photo.

However, the reverse is not necessarily true. For example, when the file includes a bitmap or pixel map object, it is not certain that this bitmap or pixel map actually represents a photographic image. The contents might as well be text or business graphics or a map which could as well have been defined as text or vector graphics.

It is an object of the invention to provide a method which permits to better adapt the image processing algorithms to the content types of the respective image parts. To that end, the method according to the invention comprises the steps of:
- rasterizing the image,
- segmenting the rasterized image into segments that are distinguished by pre-defined content types,
- deriving, from the image file, a display list with objects to be included in the image,
- associating each object with one of the segments on the basis of a spatial relationship between the object and the segments,
- selecting, for each object, an image processing algorithm based on the content type of the associated segment, and
- processing each object with the selected algorithm.

The invention has the advantage that, even when the image is defined by an object-based image file, e.g. in a page description language (PDL), powerful known segmentation algorithms may be used for identifying the content type of different parts of the image, which permits to classify the contents far more precisely then would be possible on the basis of the object definitions. For example, while the object definitions permit only to distinguish between object types such as text, vector graphics or pixel map, the segmentation process is capable of recognizing other content types such a geographical maps, road maps, an business graphics, and is also capable of recognizing text, for example, even when it had been defined as a bitmap. On the other hand, since the image processing algorithms that have been selected on the basis of the result of the segmentation are not applied to the areas of the segments but to the related objects, the borders of the areas where the processing algorithms apply are precisely defined by the object definitions.

As a result, the processing algorithms and the areas where they apply may precisely be tailored to the actual contents of the image.

The invention encompasses also a printer and a software product implementing the method that have been described above.

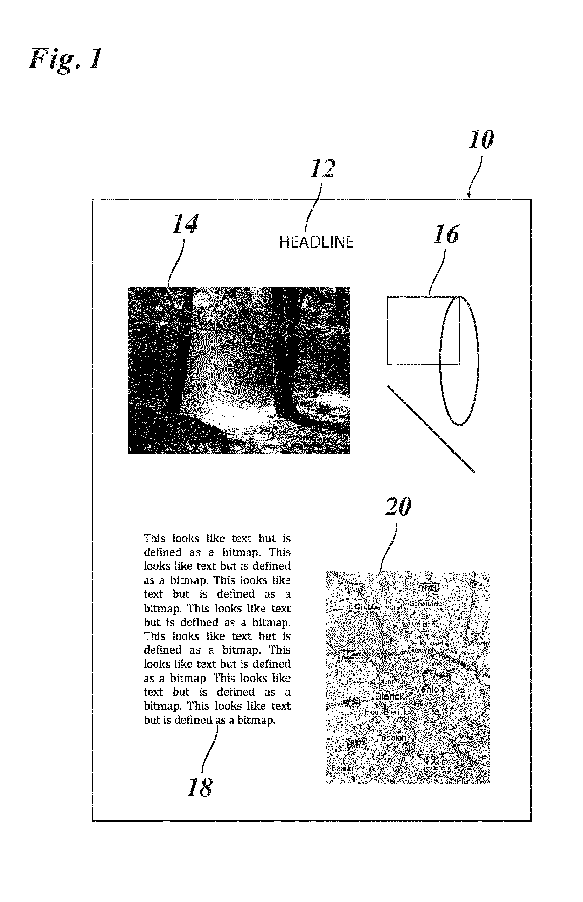

An embodiment example will now be described in conjunction with the drawings, wherein:
- Fig. 1: shows an example of an image to be processed in accordance with the principles of the present invention;
- Fig. 2: illustrates an intermediate result of the method according to the invention for the image shown in Fig. 1; and
- Fig. 3: is a flow diagram illustrating the essential steps of the method according to the invention.
As is shown in Fig. 1, a page-size image 10 may be composed of a plurality of objects, such as a headline 12, a photo 14, graphical objects 16, text 18 and a road map 20. The image 10 may be defined in an image file that is formatted in accordance with a known page description language such as PostScript or the like.

In this example, it shall be assumed that the headline 12 is defined as text, i.e. a string of ASCII characters with specifications for the text colour, the font type, font size and style and coordinate information defining the position of the text on the page.

The photo 14 will be included in the image file in the form of a pixel map along with coordinate information indicating the position of the photo on the page.

The graphical objects 16 will be defined as vector graphics, i.e. a set of instructions for drawing a line, a square and an ellipse with specified dimensions and in specified coordinate positions, along with attributes for fill colour, contour colour, line width and the like.

The text 18 could be defined as text just as the headline 12. However by way of example, it shall be assumed here that the text 18 has been scanned-in from a hard copy and is therefore defined in the image file as a bitmap.

The road map 20 comprises a multi-colour background with lines (roads and borders) and text superposed thereon. This road map 20 might have been defined in the image file as a pixel map just as the photo 14 but may as well be defined as vector graphics (specifying the coloured areas of the background and the roads), combined with text.

According to the invention, the content types of the various objects described above are not derived directly from the object definitions in the image file but by means of a segmentation process. To that end, the image is at first rasterized so as to obtain a pixel map representation of the entire image. In this rasterization process, a preselected standard algorithm may be used for the necessary image processing such as colour management and the like. The resolution of the pixel map should on the one hand be high enough to permit a reasonable segmentation and should on the other hand be as small as possible so as to limit the necessary processing time.

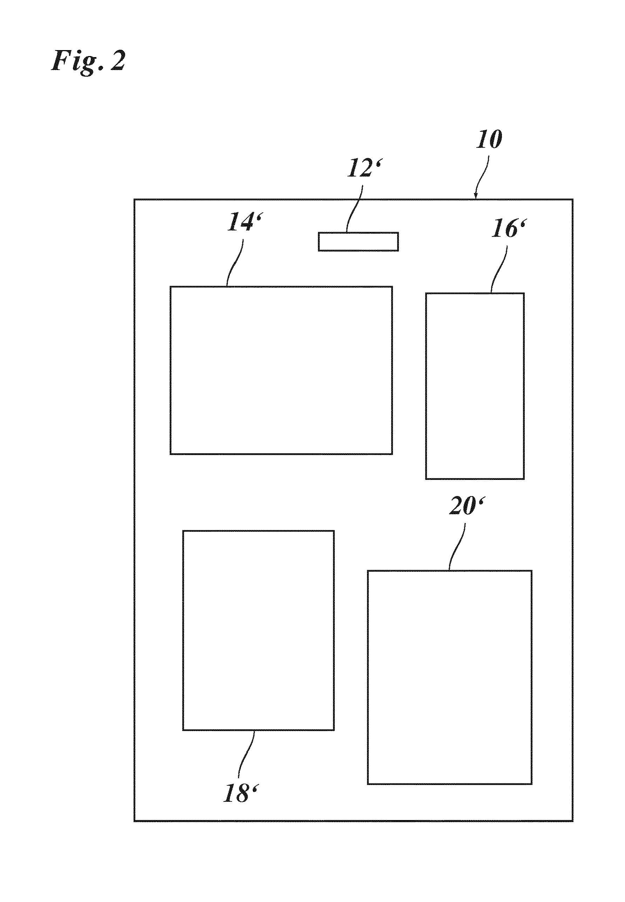

The rasterized image is then subjected to a segmentation process the result of which is illustrated in Fig. 2. As is generally known in the art, the segmentation process searches for areas in the raster image that consist of contents of a certain pre-defined type. There will be a number of pre-defined content types such as colour photo, black and white photo, CAD graphics, text, map, business graphics and the like. For each part of the page (except white background), the segmentation process has to decide to which one of the pre-defined content types this part of the image belongs. This may be done for example by means of spatial frequency analysis.

As is shown in Fig. 2, in this example, the process results in five separate segments 12', 14', 16', 18' and 20'. The segment 12' corresponds to the headline 12 and is classified as text. The segment 14' corresponds to the photo 14 and is classified as photo. The segment 16' covers the graphical objects 16 and is classified as CAD drawing. The segment 18' corresponds to the text 18 and is classified as text, because the segmentation process ignores that the text 18 was defined as a bitmap in the original image file. The segment 20' corresponds to the road map 20 and is classified as "map".

In a next step, the image file is interpreted, and a display list is established which includes the definitions of all the objects 12 - 20. Since these object definitions include coordinate information permitting to determine the location of each object on the page, it is possible to compare the locations of the objects to the locations of the segments 12' - 20'. In the simple example that has been shown here, each object is included in one of the segments, so that the segment to which a given object belongs can easily be determined.

In general, there may be cases where the segmentation process cannot exactly determine the borders of the segments, so that an object may extend beyond the border of the segment with which it has been associated. There may even be cases where an object extends over two or more segments. Nevertheless, each object must be associated with exactly one segment. As a general rule, an object will be associated with the segment that includes the largest part of the area covered by the object.

When each object has been associated with one and only one of the segments in this way, the object can be tagged with the content type of the associated segment. Thus, the headline 12 and the text 18 will be tagged as "text", the photo 14 will be tagged as "photo", the graphical objects 16 will be tagged as "CAD drawing" and the road map 20 will be tagged as "map".

Then, the display list will be processed object by object so as to render each of the object by executing the instructions included in the respective object definitions. The processing of each object will include image processing steps such as colour management and the like, and the image processing algorithms will be selected individually for each object based on the content type of the associated segment. Thus, it is assured that the text objects 12 and 18 will be processed with algorithms that are optimal for text, so that the text will be rendered with plain black characters. Similarly, the photo 14 will be rendered with algorithms that are optimal for photos so as to give a realistic visual impression. The graphical object 16 will be rendered with image processing algorithms resulting in clear colours and smooth contours, and the road map 20 will be rendered with processing algorithms that are optimized for maps, including colour management that makes the text clearly stand out against the coloured background.

It will be understood that the display list is ordered such that the objects will be rendered in the sequence in which the objects are layered in the image, so that, when two objects overlap, the background will be processed first and will then be superposed by the object that is processed later.

There may be special cases where an object such as text or transparent graphics is entirely superposed on a background object such as a photo, so that the text or graphics may not be recognized correctly in the segmentation process. In this case, an exception from the general rule for associating objects with segments may be admitted. For example, when two objects have been associated with the same segment, one being a background object defined as a pixel map in the image file and the other being a foreground object and defined as text in the image file, then only the background object will be tagged as "photo" in accordance with the result of the segmentation, whereas, for the foreground object, the segmentation result will be ignored and the object will be tagged as "text" and will accordingly be processed with processing algorithms optimized for text, so that the text will be clearly visible on the background photo. Similar exceptions may apply for vector graphics in relation to photos and for text in relation to vector graphics.

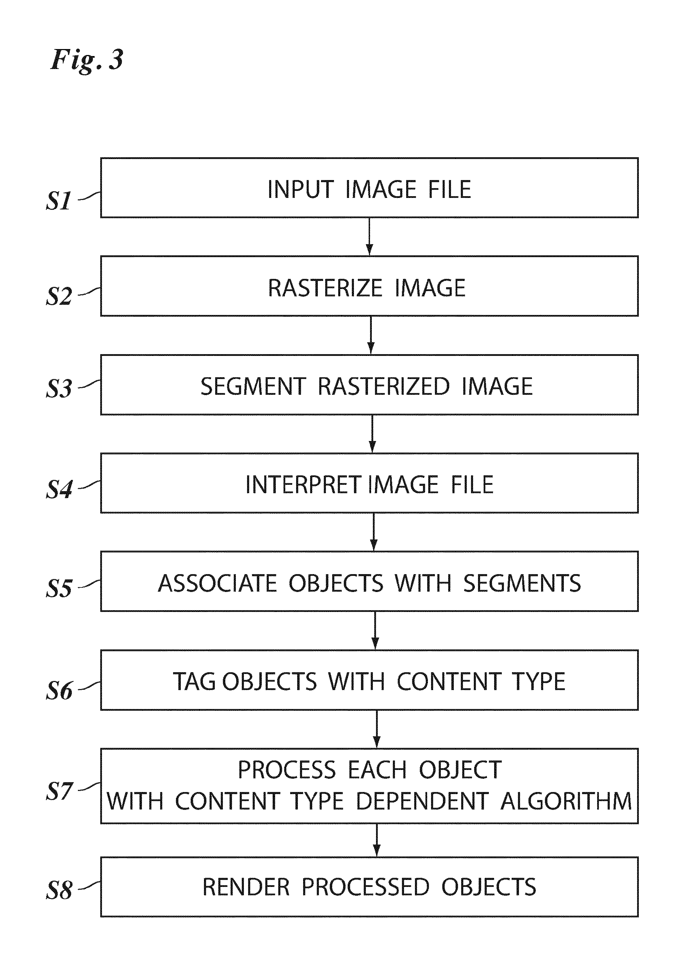

The essential steps of the method according to the invention have been summarized in Fig. 3. It will be understood that the method may be carried out, for example, in an image processor that forms part of a digital printer. As an alternative, the method may be carried out on a multi-purpose computer loaded with suitable software so as to process an image file that will then be sent to a printer for being printed.

In step S1, an input image file is loaded into the image processor. The image is rasterized in step S2, and the rasterized image is segmented in step S3.

In step S4, the image file is interpreted so as to derive the display list. It will be understood that step S4 might also precede step S3 or step S2.

In step S5, each object of the display list is associated with the nearest segment, and, in step S6, each object is tagged with a content type, normally the content type of the segment with which it has been associated. Then, in step S7, the objects of the display list are processed one by one with image processing algorithms individually selected for each object on the basis of the content type with which it has been tagged.

When the processed image is to be printed on a printer, step S7 is followed by a step S8 in which the processed objects are rendered so as to obtain a pixel map of the entire image ready to be printed.

## Claims

1. A method of processing an object-based image file with content type dependent image processing algorithms, comprising the steps of:
- rasterizing the image,
- segmenting the rasterized image (10) into segments (12', 14', 16', 18', 20') that are distinguished by pre-defined content types,
- deriving, from the image file, a display list with objects (12, 14, 16, 18, 20) to be included in the image (10),
- associating each object (12, 14, 16, 18, 20) with one of the segments (12', 14', 16', 18', 20') on the basis of a spatial relationship between the object and the segments,
- selecting, for each object, an image processing algorithm based on the content type of the associated segment, and
- processing each object with the selected algorithm.

2. A method according to claim 1, in which the pre-defined content types comprise photo, text, and business graphics.

3. A digital printer comprising an image processor configured to execute the method according to claim 1.

4. A software product including program code that, when executed on a computer, causes the computer to carry out the method according to claim 1.
